# EUROPEAN PATENT SPECIFICATION

(11) **EP 1 360 247 B1**
(45) Date of publication and mention of the grant of the patent: **07.11.2012**
(21) Application number: 01998602.5
(22) Date of filing: 30.11.2001
(51) Int. Cl.: C09D 5/02, C09D 17/00

(54) **WATERBORNE COATING COMPOSITIONS**
WASSERLACKE
COMPOSITIONS DE REVETEMENT EN PHASE AQUEUSE

(30) Priority: 01.12.2000 US 250708 P
(43) Date of publication of application: 12.11.2003
(73) Proprietor: The Sherwin-Williams Company, Cleveland, OH 44115 (US)
(72) Inventor: SWEITZER, Gerald, M., North Ridgeville, OH 44039 (US); MULLEN, Brian, A., Medina, OH 44250 (US); PATKA, John, J., Sr., Seven Hills, OH 44131 (US); NEMUNAITIS, Daniel, P., Novelty, OH 44072 (US)
(74) Representative: Morf, Jan Stefan
(86) International application number: PCT/US2001/044891
(87) International publication number: WO 2002/044286

(56) References cited:
- EP-A- 0 837 111
- US-A- 5 385 960
- US-A- 6 074 474

## Description

### CROSS-REFERENCE TO RELATED APPLICATION

This application claims the benefit of U.S. Provisional Application No. 60/250708, filed December 1, 2000.

### BACKGROUND OF THE INVENTION

This invention relates to a method for the preparation of a waterborne coating composition using all liquid slurry raw materials and an all liquid blend process for making the coatings. The process of this invention reproducibly produces waterborne coating formulations having predetermined quality such as viscosity, pH, and NVM, and reproducible color and gloss. The present invention utilizes raw material slurry compositions whereby each raw material, including titanium dioxide, pigment extenders, and thickeners, is preformulated as liquid slurries to have substantially the same viscosity. According to this invention, each raw material slurry typically has substantially the same viscosity as that desired of the final waterborne coating product The slurries are admixed and blended, by volumetric and gravimetric methods, to form coating formulations having predetermined quality and specifications.

Conventional waterborne paint manufacturing processes consist of mixing or blending pigments and various liquid and dry additives with latex resins, and then processing or grinding using high speed Cowles dispersers. Dry raw materials commonly used in waterborne coatings include prime hiding, extender and prime colored pigments and hydroxyethylcellulose thickeners. Typically, waterborne formulations contain high levels of these hard-to-grind pigments, which are dispersed with low volume extenders, pigments, and additives in a high speed Cowles disperser. The dispersion paste is then thinned down by adding other raw materials such as water based vehicles and defoamers, and then subsequently adding other raw materials such as liquid pigment slurries and thickeners to obtain the final unshaded product. Liquid components commonly used in waterborne coatings include additives such as wetting agents, dispersants, defoamers, glycols, mildewcides, bactericides, coalescents, ammonium hydroxide, and amines, as well as pigment slurries and latex. Multiple additions of the required shading bases are then necessary to achieve the final color. Other adjustments to the final product to meet specifications for example for gloss, viscosity, and pH, are common. Thus, the raw materials used in waterborne paint formulations typically contain high levels of materials having extremely narrow compatibility tolerances, due to incompatibilities of the components in the mixing. Of particular concern in any system is the ability to reproducibly and consistently obtain the same quality of product. Also, pigments in colorant dispersions and conventional pigment slurries have a tendency to settle, which require agitators that can maintain the dispersions as a reasonably uniform mixture. It is sometimes also necessary to add materials that are incompatible with materials already in the process stream. Such additives, as well as their order of addition, may cause problems associated with stability, seeding and/or settling typically due to these incompatibilities.

Thus, there is a need for a process to overcome the incompatibilities between raw materials in formulation. There is also a need to produce waterborne coatings with reproducible quality and characteristics, without the need for making adjustments to the final waterborne coating products that do not meet quality specifications. In accordance with the teachings of the present invention, paint manufacturing process steps can be significantly reduced by first consolidating or interblending the raw materials into liquid blends or slurries, and then continuously, simultaneously, or sequentially admixing the liquid slurries to obtain a final waterborne coating. The waterborne coatings produced by the method according to this invention do not require rebalancing or adjustments for example to pH, viscosity, and color. Thus, in the present invention, a waterborne product can be achieved having predetermined quality and physical properties such as color, viscosity, pH, NVM, and gloss by cross-blending the liquid blends or slurries.

### SUMMARY OF THE INVENTION

The present invention is directed to a method for the preparation of a waterborne coating composition comprising 1) providing a plurality of liquid blend raw materials, wherein said liquid blend raw materials are (a) 0 to 70 percent by weight, based on the total weight of the composition, of a titanium dioxide slurry; (b) 0 to 75 percent by weight, based on the total weight of the composition, of at least one extender pigment slurry that can be selected from the group consisting of calcium carbonate slurry, silica slurry, and kaolin clay slurry; (c) 1 to 20 percent by weight, based on the total weight of the composition, of at least one thickener slurry that can be selected from the group consisting of polyacrylates, hydroxyethylcellulose, alkali soluble emulsions, hydrophobic ethoxylated urethane resins, and hydrophobically-modified alkali soluble emulsions; (d) 1 to 10 percent by weight of a glycol slurry; and (e) at least one latex binder; 2) admixing the liquid blend raw materials to produce the waterborne coating composition; and wherein the waterborne coating composition has substantially the same viscosity as the liquid blend raw material slurries; and wherein the viscosity of said waterborne coating is in the range of 70-125 and Krebs units.

This invention utilizes pigment slurries comprising (a) 20 to 90 percent by weight, based on the total weight of the slurry, of titanium dioxide pigment; (b) 0.5 to 10 percent by weight, based on the total weight of the slurry, of a glycol; and (c) 0.1 to 10 percent by weight, based on the total weight of the slurry, of at least one thickener that can be selected from the group consisting of polyacrylates, hydroxyethylcellulose, alkali soluble emulsions, hydrophobic ethoxylated urethane resins, and hydrophobically-modified alkali soluble emulsions. The pigment can be selected from the group consisting of titanium dioxide, calcium carbonate, kaolin clay and silica. The Stormer viscosity of said pigment slurry is in the range of about 70-125 Krebs units. A process for producing the slurry is also provided.

The object is to provide a process for producing a waterborne coating composition having predetermined viscosity characteristics utilizing a total liquid blend process, comprising: (a) providing a plurality of reservoirs containing liquid blend slurries of raw materials, said liquid blend slurries of raw materials have substantially the same viscosities; (b) continuously, simultaneously, or sequentially mixing a latex binder with a controlled amount of the liquid blend slurries from said reservoirs to produce the waterborne coating. The final waterborne coating product has substantially the same viscosity as the liquid blend slurries and does not require additional adjustments for viscosity. The process comprises providing suitable liquid blends of raw materials, such as titanium dioxide slurries or other pigment slurries, such as extender pigment slurries of calcium carbonate, kaolin clay, silica, and glycol slurries, or mixtures thereof.

### DETAILED DESCRIPTION OF THE INVENTION

According to this invention, the raw materials of waterborne coatings which are typically incompatible with each other, are made into compatible liquid blends or slurries prior to formulation. The liquid blends and slurries can then be combined together to obtain a final liquid blend waterborne coating via a continuous, simultaneous or sequential dosing process. The process of making the waterborne coating of this invention uses preferred raw material slurries, such as titanium dioxide slurries and pigment extender slurries, that are preformulated at a viscosity similar to the final paint product. All other liquid blend raw materials, including additives to the formulation, particularly those with narrow compatibility tolerances, such as thickeners, organic solvents, and powders, are preformulated and pre-dispersed in a liquid slurry and preformulated to obtain the desired viscosity characteristics. As used herein, "slurries" is synonymous with intermediates, mixtures, blends, or composites of raw materials, and these terms are used interchangeably.

In particular, non-settling titanium dioxide slurries and other raw material slurries, are utilized in this invention, having viscosities substantially the same as the desired final waterborne coating. Typically, aqueous slurries of titanium dioxide pigment are prepared by mixing titanium dioxide pigment powder with dispersants and other additives with water in a batch mixer and stirred for a long time until the required percentage of solids and degree of dispersion is achieved in the slurry. Storage tanks hold the mixed slurry, but there must always be a high degree of agitation occurring in the tanks to prevent the titanium dioxide pigments in the slurry from settling. Due to the non-settling nature of the slurries of this invention, high agitation is not required. All other liquid raw material slurries or blends are also preformulated at the desired final waterborne coating viscosity. Ultimately, ease of manufacture occurs through the total liquid blending process of this invention. In contrast to a conventional latex process where a large number of raw materials are utilized, and adjustments for examples to pH, and viscosity, are usually required, the process of the present invention minimizes the number of raw materials required due to consolidation of raw material components in a liquid blend. This process also eliminates the problems associated with settling and seeding in the final blend. Colored shading bases can also be added during the blending process by accurate dispensing and/or metering. The system allows for the greatest formulation flexibility, as well as the best process and quality control designed system, and also minimizes raw materials while maintaining product mix and lowest effective total operation cost.

### Titanium Dioxide Slurries

The titanium dioxide slurries useful for this invention have a viscosity of a desired final waterborne coating product. The titanium dioxide slurry can be utilized in a liquid blend paint manufacturing system. The predispersed slurry may be stored for considerable periods of time without settling, although occasional agitation in a storage tank is preferred. The present predispersed titanium dioxide slurry has been found to remain free from agglomerates and remain stable in a storage tank for extended periods of time. This process is repeated for all other dry components such as other pigments and pigment extenders. Said dry components are processed into liquid slurries and stored in the same fashion. Thus, all components utilized by this process are converted to an all liquid system prior to the manufacturing process.

Preferably, the titanium dioxide slurry comprises (a) 50 to 90 percent by weight, based on the total weight of the slurry, of titanium dioxide pigment; (b) 0.5 to 10 percent by weight, based on the total weight of the slurry, of a glycol; and (c) 0.1 to 10 percent by weight, based on the total weight of the slurry, of at least one thickener. The thickener can be selected from the group consisting of polyacrylates, hydroxyethylcellulose, alkali soluble emulsions, hydrophobic ethoxylated urethane resins, and hydrophobically-modified alkali soluble emulsions. Examples of alkali-soluble emulsions and polyacrylates include ACRYSOL® ASE-60, ACRYSOL® G-111, ASE-75, and ASE-95NP, all commercially available from Rohm & Haas Company. Hydrophobically-modified alkali soluble emulsions and hydrophobic ethoxylated urethane resins are generally known as associated thickeners. Hydrophobically-modified alkali soluble emulsions are generally copolymers of high levels of (meth)acrylic acid with hydrophobic monomers, and hydrophobic ethoxylated urethane resins are generally the reaction products of polyethylene glycols with diisocyanates. Examples of hydrophobically-modified alkali soluble emulsions include ACRYSOL® RM-5, RM-6, TT-615, and TT-935 (commercially available from Rohm & Haas). Examples of hydrophobic ethoxylated urethane resins include ACRYSOL® RM-825, RM-8W, RM-2020NPR, SCT-275, and RM-12W (commercially available from Rohm & Haas). Glycols useful for the titanium dioxide slurry, as well as any other slurry of this invention, can be any glycol that can provide wettability to the slurry and help prevent the seeding and/or settling of raw material particulates. Useful glycols can include ethylene glycol, propylene glycol, diethylene glycol, and dipropylene glycol. Weight percents of the thickeners are adjusted in order to obtain a viscosity of the titanium dioxide slurry in the range of 70-125 Krebs units.

### Extender Slurries

The pigment extender slurries such as the calcium carbonate and clay slurries each comprise (a) 50 to 90 percent by weight, based on the total weight of the slurry, of the extender pigment; (b) 0.5 to 10 percent by weight, based on the total weight of the slurry, of a glycol; and (c) 0.1 to 10 percent by weight, based on the total weight of the slurry, of at least one thickener selected from the group consisting of polyacrylates, hydroxyethylcellulose, alkali soluble emulsions, hydrophobic ethoxylated urethane resins, and hydrophobically-modified alkali soluble emulsions. The thickeners and glycols useful for this slurry is as defined under the titanium dioxide slurries. Weight percents of the thickeners are adjusted in order to obtain a viscosity of the extender slurry in the range of 70-125 Krebs units.

The silica pigment extender slurry comprises (a) 20 to 50 percent by weight, based on the total weight of the slurry, of the silica; (b) 0.5 to 10 percent by weight, based on the total weight of the slurry, of a glycol; and (c) 0.1 to 10 percent by weight, based on the total weight of the slurry, of at least one thickener selected from the group consisting of polyacrylates, hydroxyethylcellulose, alkali soluble emulsions, hydrophobic ethoxylated urethane resins, and hydrophobically-modified alkali soluble emulsions. The thickeners and glycols useful for this slurry is as defined under the titanium dioxide slurries. Weight percents of the thickeners are adjusted in order to obtain a viscosity of the silica slurry in the range of 70-125 Krebs units.

Preferably, the pigment and pigment extender slurries will also contain one or more dispersants, present in an amount between 0.1 to 5%, based on the weight of the slurry. Useful dispersants include organic polyelectrolytes such as 2-amino-2-methyl-1-propanol, triethanolamine, sorbitol, mannitol, water soluble sodium salts, for example, alkali polyphosphates, aliphatic carboxylic acids and alkali salts thereof, polyacrylic acids and alkali salts thereof, polyhydroxy alcohols, amino alcohols, sodium salt of polymeric carboxylic acids, such as Tamol 963, sold by Rohm & Haas, and mixtures thereof. For some applications, the preferred range of dispersants can be in an amount of 0.1 to 2.0 weight percent, based on the weight of the slurry.

It has been found advantageous to further add to the slurry up to 10% by weight, based on the total weight of the slurry, of a glycol. A preferred glycol for this invention is ethylene glycol. For some applications, ethylene glycol is present in an amount of 0.5 to 3 weight percent, based on the weight of the slurry.

In addition, other conventional additives may be incorporated into the slurry, such as bactericides, preservatives, defoamers, surfactants, and coalescents. Common bactericides include Proxel GXL, manufactured by ICI, used at a concentration of from 0.01 to 2 weight percent of the slurry. Defoamers include Nopco 8034, manufactured by the Nopco Division of Diamond Shamrock Corporation. Surfactants include nonylphenols. Coalescents include Texanols manufactured by Eastman Chemical Company, Kingsport, Tennessee.

### Glycol Slurry

Glycol slurries useful for this invention comprises (a) 5 to 50 percent by weight, based on the total weight of the slurry, of a glycol selected from the group consisting for example of ethylene glycol, propylene glycol, etc.; and (b) 1 and 50 percent by weight, based on the total weight of the slurry, of at least one thickener selected from the group consisting of polyacrylates, hydroxyethylcellulose, alkali soluble emulsions, hydrophobic ethoxylated urethane resins, and hydrophobically-modified alkali soluble emulsions. Examples of the thickeners are the same as provided under the titanium dioxide slurries. Weight percents of the thickeners are adjusted in order to obtain a viscosity of the glycol slurry in the range of 70-125 Krebs units.

The slurry is made by admixing a glycol, such as ethylene glycol, with at least one thickener, dispersing with a high speed mixer, then admixing defoamer, coalescent, and cosolvent. Mixing is maintained as thickener and buffer are added to complete the slurry.

### Thickener Slurry

The thickener slurry useful for this invention comprises 5 to 30% by weight, based on the total weight of the slurry, of at least one thickener selected from the group consisting of polyacrylates, hydroxyethylcellulose, alkali soluble emulsions, hydrophobic ethoxylated urethane resins, and hydrophobically-modified alkali soluble emulsions. Examples of the thickeners are the same as provided under the titanium dioxide slurries. Most preferred is the alkali-soluble emulsions and the hydrophobically-modified alkali-soluble emulsions. Polyacrylates, hydroxyethylcellulose, though a possible thickener, is least desirable due to its dry form and difficulty to incorporate into the slurry. It is essential that the pH of the thickener slurry be in the range of 5.5 to 6.5. The viscosity of the thickener slurry is in the range of 70-125 Krebs units.

### Coating Composition

According to this invention, various waterborne coating compositions can be prepared by blending the above-referenced slurries with at least one latex binder having substantially the same viscosity as the desired final waterborne product. The waterborne coating composition comprises 0-70 weight percent of the titanium dioxide dioxide slurry, 0 to 50 weight percent of at least one pigment extender slurry, preferably selected from the group consisting of calcium carbonate slurry, clay slurry, and silica slurry; 1 to 10 weight percent of a glycol slurry; and 1 to 20 weight percent of a thickener slurry, and the remaining amount being a latex binder. The thickener can be selected from the group consisting of polyacrylates, hydroxyethylcellulose, alkali soluble emulsions, hydrophobic ethoxylated urethane resins, and hydrophobically-modified alkali soluble emulsions, all based on the total weight of the coating composition. The slurries are admixed and blended with at least one latex binder to form a final waterborne coating composition. The latex can be any commercially available latex polymer. The latex binder may be a dispersed polymer having polymer particles dispersed in an aqueous evaporable carrier or it may be either a water soluble polymer, a water-reducible polymer, a mixture of the water soluble and water-reducible polymers in the aqueous evaporable carrier, or a mixture of the dipsersed, water-reducible and water soluble polymers in the aqueous evaporable carrier. If desired, the latex binder may include a mixture of a dispersed polymer with a water soluble or a water-reducible polymer.

The latex polymer suitable for use in the present invention includes an emulsion polymer of mono- or poly-ethylenically unsaturated olefinic, vinyl or acrylic monomers, including homopolymers and copolymers of such monomers. Specifically, the dispersed polymer may include poly(vinyl acetate) and copolymers of vinyl acetate with one or more of vinyl chloride, vinylidene chloride, styrene, vinyltoluene, acryluonitrile, methacrylonitrile, acrylamide, methacrylamide, maleic acid and esters thereof, or one or more of the acrylic and methacrylic acid esters, which polymers are well-known as the film-forming component of aqueous base paints; homopolymers of C2-C40 alphaolefins such as ethylene, isobutylene, octene, nonene, and styrene; copolymers of one or more of these hydrocarbons with one or more esters, nitriles, or amides of acrylic acid or of methacrylic acid or with vinyl esters, such as vinyl acetate and vinyl chloride, or with vinylidene chloride; and diene polymers, such as copolymers of butadiene with one or more of styrene, vinyl tolutene, acrylonitrile, methacrylonitrile, and esters of acrylic acid or methacrylic acid. The vinyl acetate copolymers are well-known and include copolymers such as vinyl acetate/butyl acrylate/2-ethylhexyl acrylate, vinyl acetate/butyl maleate, vinyl acetate/ethylene, vinyl acetate/vinyl chloride/butyl acrylate and vinyl acetate/vinyl chloride/ethylene.

Other suitable monomers from which the latex binder may be polymerized from include at least one or more of the following monomers, such as, for example, acrylic and methacrylic ester monomers including methyl (meth) acrylate, ethyl (meth)acrylate, butyl (meth)acrylate, 2-ethylhexyl (meth)acrylate, decyl (meth)acrylate, lauryl (meth)acrylate, isobornyl (meth)acrylate, isodecyl (meth)acrylate, oleyl (meth)acrylate, palmityl (meth)acrylate, stearyl (meth)acrylate, hydroxyethyl (meth)acrylate, and hydroxypropyl (meth)acrylate; acid functional monomers, such as acrylic acid, methacrylic acid, crotonic acid, itaconic acid, famuric acid and maleic acid; monomethyl fumarate; monobutyl fumarate; maleic anhydride, acrylamide or substituted acrylamides; sodium vinyl sulfonate; phosphoethyl (meth)acrylate; acrylamido propane sulfonate; diacetone acrylamide; glycidyl methacrylate; acetoacetyl ethylmethacrylate; acrolein and methacrolein; dicyclopentadienyl methacrylate; dimethyl meta-isopropenyl benzyl isocyanate; isocyanato ethyl-methacrylate; styrene or substituted styrenes; butadiene; ethyleen; vinyl acetate or other vinyl esters, N-vinyl pyrrolidone; amino monomers, such as for example, N, N'-dimethylamino and (meth)acrylate.

The final waterborne product will have a viscosity substantially the same as each of the slurries, and preferably in the range of 70-125 Krebs units.

Preservatives, defoamers, freeze-thaw agents, and fungicides/mildewcides may be used in the coating composition at concentrations from 0.1 to 10 weight percent, based on the total weight of the coating composition. Shading bases may be added to the coating composition and further blended.

The waterborne coating composition utilized in this invention; having predetermined viscosity characteristics are prepared utilizing a total liquid blend process. A plurality of liquid blend raw materials is admixed to produce the waterborne coating product. The process can include providing a plurality of reservoirs containing liquid blends of raw materials, each liquid blend of raw materials have substantially the same viscosities, then admixing a controlled amount of the liquid blends from said reservoirs in a mix tank having an appropriate agitation means, such as an impeller or other agitation means known in the art, and then producing a final liquid blend waterborne coating product by exposing the liquid blend slurries in said mix tank with said agitation means. The liquid blend raw materials can include latex binders, titanium dioxide slurries, extender pigment slurries, thickener slurries, and mixtures thereof. The thickener can be selected from the group consisting of polyacrylates, hydroxyethylcellulose, alkali soluble emulsions, hydrophobic ethoxylated urethane resins, and hydrophobically-modified alkali soluble emulsions. Preferably, the pH of the thickener slurry is in the range of between 5.5 to 6.5. The viscosity of the final waterborne coating is in the range of 70-125 Krebs units.

The following examples illustrate the invention.

### EXAMPLES

The pigment slurries are generally prepared by subjecting a pigment with dispersing treatment using a high speed mixer, admixing the dispersed pigment slurry with a glycol, adding at least one thickener which can be selected from the group consisting of polyacrylates, hydroxyethylcellulose, alkali soluble emulsions, hydrophobic ethoxylated urethane resins, and hydrophobically-modified alkali soluble emulsions; and forming an aqueous pigment slurry by dispersing with a mixer.

### EXAMPLE 1

### Titanium Dioxide Slurry

An aqueous titanium dioxide slurry can be made according to the formula in Table 1.

The aqueous TiO2 slurry is prepared by subjecting TiO2 with a water and dispersant mixture, dispersing with a high speed-mixer, then admixing defoamer, a glycol, and cosolvent. Mixing is maintained as thickener, buffer, and biocide are added to complete the slurry. (TiPure® titanium dioxide is manufactured by E.I. duPont deNemours & Company.) A titanium dioxide slurry at 61 % solids can be prepared according to the following formula listed in the following table:

| | Description | Weight g/l (lbs/100 gal) | Weight % in Slurry |
|---|---|---|---|
| Water | Solvent | 615.91 (514) | 34.67 |
| TKPP (Potassium TriPolyPhosphate) | Dispersant | 2.40 (2) | 1.3 |
| Tamol 963 | Dispersant | 21.57 (18) | 1.21 |
| Nonylphenol | Surfactant | 3.59 (3) | 2.0 |
| Ti-Pure® R931 titanium dioxide | Pigment | 1066.46 (890) | 60.0 |
| Nopco 8034 | Defoamer | 1.20 (1) | 0.07 |
| Ethylene Glycol | | 32.35 (27) | 1.82 |
| Texanol | Coalescent | 16.18 (13.5) | 0.91 |
| Acrysol TT-935 | Thickener | 7.19 (6) | 0.40 |
| Acrysol TT-615 | Thickener | 2.40 (2) | 0.13 |
| Ammonia | Buffer | 5.99 (5) | 0.34 |
| Proxel GXL | Biocide | 1.20 (1) | 0.07 |

The titanium dioxide slurry may further comprise an extender selected from the group consisting of calcium carbonate, clay, silica, and others. The titanium dioxide slurry is dispersed at high shear having an impeller sufficient to deagglomerate the titanium dioxide. The dispersed slurry has a Krebs Stormer viscosity in the range of 70-125 Krebs units, and a solids content of 60-75%.

### EXAMPLE 2

### Calcium Carbonate Slurry

The aqueous calcium carbonate slurry can be prepared by subjecting precipated calcium carbonate 325 mesh with a water and dispersant mixture, dispersing with a high speed mixer, then admixing defoamer, a glycol, and cosolvent. Mixing is maintained as thickener, buffer, and biocide are added to complete the slurry.

| | Description | Weight g/l (lbs/100 gal) | % in Slurry |
|---|---|---|---|
| Water | Solvent | 491.29 (410.41) | 28.00 |
| Tamol 963 | Dispersant | 12.94 (10.8) | 7.4 |
| Nonylphenol - | Surfactant | 3.59 (3) | 2.1 |
| Calcium Carbonate | Pigment | 1192.27 (995) | 68.0 |
| Nopco 8034 | Defoamer | 1.20 (1) | 0.07 |
| Ethylene Glycol | | 23.97 (20) | 1.37 |
| Texanol | Coalescent | 11.98 (10) | 0.68 |
| Acrysol TT-935 | Thickener | 10.31 (8.6) | 0.59 |
| Acrysol TT-615 | Thickener | 3.47 (2.9) | 0.20 |
| Proxel GXL | Biocide | 1.20 (1) | 0.07 |

The dispersed slurry has a Krebs Stormer viscosity in the range of 70-125 Krebs units, and a solids content of 60-75%.

### . EXAMPLE 3

### Silica Slurry

The silica slurry is prepared by subjecting Celite® diatomaceous earth with a water and dispersant mixture, dispersing with a high speed mixer, then admixing defoamer, a glycol, and cosolvent. Mixing is maintained as thickener, buffer, and biocide are added to complete the slurry.

| | Description | Weight g/l (lbs/100 gal) | % in Slurry |
|---|---|---|---|
| Water | Solvent | 812.42 (678) | 68.0 |
| TKPP (Potassium TriPolyPhosphate) | Dispersant | 2.40 (2) | 0.2 |
| Tamol 963 | Dispersant | 7.19 (6) | 0.6 |
| Nonylphenol | Surfactant | 1.20 (1) | 0.1 |
| Celite 400P | Pigment | 313.95 (262) | 27.0 |
| Nopco 8034 | Defoamer | 1.20 (1) | 0.10 |
| Ethylene Glycol | | 7.19 (6) | 0.62 |
| Texanol | Coalescent | 3.59 (3) | 0.31 |
| Acrysol TT-93 | Thickener | 10.07 (8.4) | 0.86 |
| Acrysol TT-615 | Thickener | 3.36 (2.8) | 0.29 |
| Ammonia | Buffer | 1.20 (1) | 0.10 |
| Proxel GXL | Biocide | 1.20 (1) | 0.10 |

The dispersed slurry has a Krebs Stormer viscosity in the range of 70-125 Krebs units, and a solids content of 20-35%.

### EXAMPLE 4

### Thickener Slurry

The aqueous thickener slurry is prepared by admixing the following raw materials with a high speed mixer:

| | Description | Weight g/l (lbs/100 gal) | % in Slurry |
|---|---|---|---|
| Water | Solvent | 780.79 (651.6) | 77.8 |
| Nopco 8034 | Defoamer | 5.99 (5) | 0.60 |
| Acrysol TT-935 | Thickener | 155.77 (130) | 0.15 |
| Acrysol TT-615 | Thickener | 51.88 (43.3) | 5.17 |
| Ammonia | Buffer | 7.79 (6.5) | 0.78 |
| Proxel GXL | Biocide | 1.20 (1) | 0.12 |

It is critical to this invention that the pH of the thickener solution be in the range of about 5.5 to 6.5.

The thickener slurry has a Krebs Stormer viscosity in the range of 70-125 Krebs units, and a solids content of 5-10%.

### EXAMPLE 5

### Glycol Slurry

The aqueous glycol slurry is prepared by admixing the following raw materials with a high speed mixer:

| | Description | Weight g/l (lbs/100 gal) | % in Slurry |
|---|---|---|---|
| Water | Solvent | 607.04 (506.6) | 36.84 |
| Nonylphenol | Surfactant | 8.99 (7.5) | 0.55 |
| Nopco 8034 | Defoamer | 53.80 (44.9) | 3.26 |
| Ethylene Glycol | | 607.04 (506.6) | 36.84 |
| Texanol | Coalescent | 301.96 (252) | 18.32 |
| Acrysol TT-935 | Thickener | 47.93 (40) | 2.91 |
| Acrysol TT-615 | Thickener | 15.58 (13) | 0.95 |
| Ammonia | Buffer | 5.51 (4.6) | 0.33 |

The glycol slurry has a Krebs Stormer viscosity in the range of 70-125 Krebs units, and a solids content of 5-10%.

One or more of the above slurries, having the desired viscosity characteristics, can be used to produce the waterborne coatings of this invention having substantially the same viscosity characteristics. The slurries can be stored in respective reservoirs, and then directly blended within a processing vessel equipped with mixing means, without the need for grinding or high shear mixing. The manufacturing process can be controlled through computer means or manually dispensed. A typical computer control system can control pump speeds, rates, and quantities of additions of components, and measurements taken on-line by various instrumentation.

The order of addition of the liquid raw material slurries/blends is not critical to this invention. Shading bases can also be blended during the raw material blending process to form a finished product The color shading bases are added after formula blending has occurred by accurate dispensing or metering.

### COMPARATIVE EXAMPLE

As a comparison example, a batch of latex paint was formulated using a conventional paint making process. The formulation is listed in Table I.

### COMPARATIVE EXAMPLE

### Conventional Process Formula

Grind: The following pigment dispersion is prepared using the ingredients in the following order, and subjected to a dispersing treatment by using a high speed disperser.

| | Description | Weight g/l (lbs/100 gal) | % Weight |
|---|---|---|---|
| Water | Solvent | 170.77 (142.5164) | 13.3726 |
| TKPP (Tetrapotassium Pyrophospahte) | Dispersant | 0.84 (0.7073) | 0.5554 |
| Tamol 963 | Dispersant | 6.34 (5.2948) | 2.0903 |
| Nonylphenol | Surfactant | 1.67 (1.3953) | 0.5975 |
| Nopco 8034 | Defoamer | 1.51 (1.2600) | 0.6283 |
| Ti-Pure® R931 | Pigment | 273.31 (228.0941) | 28.5306 |
| 325 Mesh PPT CaCO3 | Pigment Extender | 73.33 (61.2491) | 10.2714 |
| Ethylene Glycol | | 44.68 (37.2989) | 15.2659 |
| Texanol | Coalescent | 22.25 (18.5734) | 8.8880 |
| Water | | 143,79 (120.0000) | 54.7292 |

The above grind is then pumped to a letdown tank, and the following raw materials are then added:

| | | | |
|---|---|---|---|
| Rovace 661 | Vinyl Acrylic Latex | 509.26 (425.000) | 39.8785 |
| Nopco 8034 | Defoamer | 2.40 (2.000) | 0.1877 |
| Acrysol TT-935 | Thickener | 15.58 (13.0844) | 1.2277 |
| Acrysol TT-615 | Thickener | 5.19 (4.3394) | 0.4072 |
| Ammonia | Buffer | 3.56 (2.9731) | 0.2790 |
| Omacide IPBC 40% | Mildewcide | 1.20 (1.0000) | 0.0938 |
| Proxel GXL | Biocide | 1.14 (0.9500) | 0.0891 |

The batch is adjusted for pH, color, and viscosity.

### EXAMPLE 6:

A second batch of the same latex paint was formulated using the slurries and process of the present invention:

| | | Weight g/l (lbs/100 gal) | % Weight |
|---|---|---|---|
| Water | | 39.77 (33.1965) | 3.1149 |
| Titanium Dioxide Slurry | | 455.34 (380.0000) | 35.6561 |
| | (Example 1) | | |
| Calcium Carbonate Slurry | | 143.79 (120.0000) | 11.2598 |
| | (Example 2) | | |
| Glycol Slurry | | 59.91 (50.0000) | 4.6916 |
| | (Example 5) | | |
| Thickener Slurry | | 65.90 (55.0000) | 5.1608 |
| | (Example 4) | | |
| Rovace 661 | | 509.26 (425.0000) | 39.8785 |
| Omacide IPBC 40% | | 1.20 (1.0000) | 0.0938 |
| Proxel GXL | | 0.65 (0.5400) | 0.0507 |
| Ammonia | | 1.20 (1.0000) | 0.093 |

The above slurries are blended together into a mix tank or container, with no dispersion necessary. The product does not require adjustments for pH, color, or viscosity.

## Claims

1. A method for the preparation of a waterborne coating composition comprising:
1) providing a plurality of liquid blend raw materials, wherein said liquid blend raw materials are
(a) 0 to 70 percent by weight, based on the total weight of the composition, of a titanium dioxide slurry;
(b) 0 to 75 percent by weight, based on the total weight of the composition, of at least one extender pigment slurry;
(c) 1 to 20 percent by weight, based on the total weight of the composition, of a thickener slurry;
(d) 1 to 10 percent by weight, based on the total weight of the composition, of a glycol slurry; and
(e) at least one latex binder;
2) admixing the liquid blend raw materials to produce the waterborne coating composition;
and wherein the waterborne coating composition has substantially the same viscosity as the liquid blend raw materials; and wherein the viscosity of said waterborne coating composition is in the range of 70-125 Krebs units.

2. The method of claim 1, wherein the extender pigment slurry can be selected from the group consisting of calcium carbonate slurry, silica slurry, and kaolin clay slurry, or mixtures thereof.

3. The method of claim 1, wherein the thickener slurry comprises at least one thickener selected from the group consisting of polyacrylates; hydroxyethylcellulose, alkali soluble emulsions, hydrophobic ethoxylated urethane resins, and hydrophobically-modified alkali soluble emulsions.

4. The method of claim 1, wherein the pH of said thickener slurry is in the range of between 5.5 to 6.5.

5. The method of claim 1, wherein the titanium dioxide slurry comprises:
a) 50 to 90 percent by weight, based on the total weight of the slurry, of titanium dioxide pigment
b) 0.5 to 10 percent by weight, based on the total weight of the slurry, of a glycol; and
c) 0.1 to 5.0 percent by weight, based on the total weight of the slurry, of at least one thickener; and
wherein the viscosity of said titanium dioxide slurry is in the range of 70-125 Krebs units.

6. The method of claim 5, wherein the thickener can be selected from the group consisting of polyacrylates, hydroxyethylcellulose, alkali soluble emulsions, hydrophobic ethoxylated urethane resins, and hydrophobically-modified alkali soluble emulsions.

7. The method of claim 2, wherein the at least one extender pigment slurry comprises
a) 50 to 75 percent by weight, based on the total weight of the slurry, of a calcium carbonate pigment;
b) 0.5 to 10 percent by weight, based on the total weight of the slurry, of a glycol; and
c) 0.1 to 5.0 percent by weight, based on the total weight of the slurry, of at least one thickener; and
wherein the viscosity of said extender pigment slurry is in the range of about 70-125 Krebs units.

8. The method of claim 7, wherein the thickener can be selected from the group consisting of polyacrylates, hydroxyethylcellulose, alkali soluble emulsions, hydrophobic ethoxylated urethane resins, and hydrophobically-modified alkali soluble emulsions.

9. The method of claim 2, wherein the at least one extender pigment slurry comprises
a) 20 to 50 percent by weight, based on the total weight of the slurry, of a silica pigment;
b) 0.5 to 10 percent by weight, based on the total weight of the slurry, of a glycol; and
c) 0.1 to 5.0 percent by weight, based on the total weight of the slurry, of at least one thickener; and
wherein the viscosity of said extender pigment slurry is in the range of about 70-125 Krebs units.

10. The method of claim 9, wherein the thickener can be selected from the group consisting of polyacrylates, hydroxyethylcellulose, alkali soluble emulsions, hydrophobic ethoxylated urethane resins, and hydrophobically-modified alkali soluble emulsions.

11. The method of claim 2, wherein the at least one extender pigment slurry comprises
a) 50 to 75 percent by weight, based on the total weight of the slurry, of a kaolin clay pigment;
b) 0.5 to 10 percent by weight, based on the total weight of the slurry, of a glycol; and
c) 0.1 to 10 percent by weight, based on the total weight of the slurry, of at least one thickener selected from the group consisting of polyacrylates, hydroxyethylcellulose, alkali soluble emulsions, hydrophobic ethoxylated urethane resins, and hydrophobically-modified alkali soluble emulsions.

## Patentansprüche

1. Ein Verfahren zur Herstellung einer Beschichtungszusammensetzung auf Wasserbasis, umfassend:
1) Bereitstellen mehrerer Rohmaterialien als Flüssiggemische, wobei die Rohmaterial-Flüssiggemische sind:
(a) 0 bis 70 Gew.-%, bezogen auf das Gesamtgewicht der Zusammensetzung, einer Titandioxidaufschlämmung,
(b) 0 bis 75 Gew.-%, bezogen auf das Gesamtgewicht der Zusammensetzung, von wenigstens einer Streckpigmentaufschlämmung,
(c) 1 bis 20 Gew.-%, bezogen auf das Gesamtgewicht der Zusammensetzung, einer Verdickeraufschlämmung,
(d) 1 bis 10 Gew.-%, bezogen auf das Gesamtgewicht der Zusammensetzung, einer Glycolaufschlämmung und
(e) wenigstens ein Latexbinder,
2) Vermischen der Rohmaterial-Flüssiggemische, um die Beschichtungszusammensetzung auf Wasserbasis zu erzeugen,
und wobei die Beschichtungszusammensetzung auf Wasserbasis im Wesentlichen die gleiche Viskosität besitzt wie die Rohmaterialien als Flüssiggemische, und wobei die Viskosität der Beschichtungszusammensetzung auf Wasserbasis im Bereich von 70-125 Krebs-Einheiten liegt.

2. Das Verfahren nach Anspruch 1, wobei die Streckpigmentaufschlämmung ausgewählt sein kann aus der Gruppe, bestehend aus einer Calciumcarbonataufschlämmung, einer Siliciumdioxidaufschlämmung und einer Kaolintonaufschlämmung oder Mischungen davon.

3. Das Verfahren nach Anspruch 1, wobei die Verdickeraufschlämmung wenigstens einen Verdicker, ausgewählt aus der Gruppe, bestehend aus Polyacrylaten, Hydroxyethylcellulose, alkalilöslichen Emulsionen, hydrophoben ethoxylierten Urethanharzen und hydrophob modifizierten alkalilöslichen Emulsionen, umfasst.

4. Das Verfahren nach Anspruch 1, wobei der pH-Wert der Verdickeraufschlämmung im Bereich zwischen 5,5 und 6,5 liegt.

5. Das Verfahren gemäß Anspruch 1, wobei die Titandioxidaufschlämmung umfasst:
a) 50 bis 90 Gew.-%, bezogen auf das Gesamtgewicht der Aufschlämmung, Titandioxidpigment,
b) 0,5 bis 10 Gew.-%, bezogen auf das Gesamtgewicht der Aufschlämmung, eines Glycols und
c) 0,1 bis 5,0 Gew.-%, bezogen auf das Gesamtgewicht der Aufschlämmung, wenigstens eines Verdickers, und
wobei die Viskosität der Titandioxidaufschlämmung im Bereich von 70-125 Krebs-Einheiten liegt.

6. Das Verfahren nach Anspruch 5, wobei der Verdicker ausgewählt sein kann aus der Gruppe, bestehend aus Polyacrylaten, Hydroxyethylcellulose, alkalilöslichen Emulsionen, hydrophoben ethoxylierten Urethanharzen und hydrophob modifizierten alkalilöslichen Emulsionen.

7. Das Verfahren nach Anspruch 2, wobei die wenigstens eine Streckpigmentaufschlämmung umfasst:
a) 50 bis 75 Gew.-%, bezogen auf das Gesamtgewicht der Aufschlämmung, eines Calciumcarbonatpigments,
b) 0,5 bis 10 Gew.-%, bezogen auf das Gesamtgewicht der Aufschlämmung, eines Glycols, und
c) 0,1 bis 5,0 Gew.-%, bezogen auf das Gesamtgewicht der Aufschlämmung, wenigstens eines Verdickers, und
wobei die Viskosität der Streckpigmentaufschlämmung im Bereich von etwa 70-125 Krebs-Einheiten liegt.

8. Das Verfahren nach Anspruch 7, wobei der Verdicker ausgewählt sein kann aus der Gruppe, bestehend aus Polyacrylaten, Hydroxyethylcellulose, alkalilöslichen Emulsionen, hydrophoben ethoxylierten Urethanharzen und hydrophob modifizierten alkalilöslichen Emulsionen.

9. Das Verfahren nach Anspruch 2, wobei die wenigstens eine Streckpigmentaufschlämmung umfasst:
a) 20 bis 50 Gew.-%, bezogen auf das Gesamtgewicht der Aufschlämmung, eines Siliciumdioxidpigments,
b) 0,5 bis 10 Gew.-%, bezogen auf das Gesamtgewicht der Aufschlämmung, eines Glycols, und
c) 0,1 bis 5,0 Gew.-%, bezogen auf das Gesamtgewicht der Aufschlämmung, wenigstens eines Verdickers, und
wobei die Viskosität der Streckpigmentaufschlämmung im Bereich von etwa 70-125 Krebs-Einheiten liegt.

10. Das Verfahren nach Anspruch 9, wobei der Verdicker ausgewählt sein kann aus der Gruppe, bestehend aus Polyacrylaten, Hydroxyethylcellulose, alkalilöslichen Emulsionen, hydrophoben ethoxylierten Urethanharzen und hydrophob modifizierten alkalilöslichen Emulsionen.

11. Das Verfahren nach Anspruch 2, wobei die wenigstens eine Streckpigmentaufschlämmung umfasst:
a) 50 bis 75 Gew.-%, bezogen auf das Gesamtgewicht der Aufschlämmung, eines Kaolintonpigments,
b) 0,5 bis 10 Gew.-%, bezogen auf das Gesamtgewicht der Aufschlämmung, eines Glycols, und
c) 0,1 bis 10 Gew.-%, bezogen auf das Gesamtgewicht der Aufschlämmung, wenigstens eines Verdickers, ausgewählt aus der Gruppe, bestehend aus Polyacrylaten, Hydroxyethylcellulose, alkalilöslichen Emulsionen, hydrophoben ethoxylierten Urethanharzen und hydrophob modifizierten alkalilöslichen Emulsionen.

## Revendications

1. Procédé de préparation d'une composition de revêtement en phase aqueuse comprenant:
1) la fourniture d'une pluralité de matières brutes en mélange liquide, lesdites matières brutes en mélange liquide étant
a) de 0 à 70 pour cent en poids, par rapport au poids total de la composition, d'une pâte de dioxyde de titane ;
b) de 0 à 75 pour cent en poids, par rapport au poids total de la composition, d'au moins une pâte de pigment de charge ;
c) de 1 à 20 pour cent en poids, par rapport au poids total de la composition, d'une pâte épaississante ;
d) de 1 à 10 pour cent en poids, par rapport au poids total de la composition, d'une pâte de glycol ; et
e) au moins un liant de latex ;
2) le mélange des matières brutes en mélange liquide afin de produire la composition de revêtement en phase aqueuse ;
et dans lequel la composition de revêtement en phase aqueuse a sensiblement la même viscosité que les matières brutes en mélange liquide, et dans lequel la viscosité de ladite composition en phase aqueuse est comprise dans la plage de 70 à 125 unités Krebs.

2. Procédé selon la revendication 1, dans lequel la pâte de pigment de charge peut être sélectionnée dans le groupe consistant en pâte de carbonate de calcium, pâte de silice et pâte d'argile kaolinique, ou leurs mélanges.

3. Procédé selon la revendication 1, dans lequel la pâte épaississante comprend au moins un épaississant sélectionné dans le groupe consistant en polyacrylates, hydroxyéthylcellulose, émulsions solubles en solution alcaline, résines d'uréthane éthoxylé hydrophobes, et émulsions solubles en solution alcaline modifiées hydrophobiquement.

4. Procédé selon la revendication 1, dans lequel le pH de ladite pâte épaississante est compris dans la plage de 5,5 à 6,5.

5. Procédé selon la revendication 1, dans lequel la pâte de dioxyde de titane comprend
a) de 50 à 90 pour cent en poids, par rapport au poids total de la pâte, d'un pigment de dioxyde de titane ;
b) de 0,5 à 10 pour cent en poids, par rapport au poids total de la pâte, d'un glycol ; et
c) de 0,1 à 5,0 pour cent en poids, par rapport au poids total de la pâte, d'au moins un épaississant ; et
d) dans lequel la viscosité de ladite pâte de dioxyde de titane est comprise dans la plage de 70 à 125 unités Krebs.

6. Procédé selon la revendication 5, dans lequel l'épaississant peut être sélectionné dans le groupe consistant en polyacrylates, hydroxyéthylcellulose, émulsions solubles en solution alcaline, résines d'uréthane éthoxylé hydrophobes, et émulsions solubles en solution alcaline modifiées hydrophobiquement.

7. Procédé selon la revendication 2, dans lequel l'au moins une pâte de pigment de charge comprend :
a) de 50 à 75 pour cent en poids, par rapport au poids total de la pâte, d'un pigment de carbonate de calcium ;
b) de 0,5 à 10 pour cent en poids, par rapport au poids total de la pâte, d'un glycol ; et
c) de 0,1 à 5,0 pour cent en poids, par rapport au poids total de la pâte, d'au moins un épaississant ; et
dans lequel la viscosité de ladite pâte de pigment de charge est comprise dans la plage de 70 à 125 unités Krebs.

8. Procédé selon la revendication 7, dans lequel l'épaississant peut être sélectionné dans le groupe consistant en polyacrylates, hydroxyéthylcellulose, émulsions solubles en solution alcaline, résines d'uréthane éthoxylé hydrophobes, et émulsions solubles en solution alcaline modifiées hydrophobiquement.

9. Procédé selon la revendication 2, dans lequel l'au moins une pâte de pigment de charge comprend :
a) de 20 à 50 pour cent en poids, par rapport au poids total de la pâte, d'un pigment de silice ;
b) de 0,5 à 10 pour cent en poids, par rapport au poids total de la pâte, d'un glycol ; et
c) de 0,1 à 5,0 pour cent en poids, par rapport au poids total de la pâte, d'au moins un épaississant ; et
dans lequel la viscosité de ladite pâte de pigment de charge est comprise dans la plage de 70 à 125 unités Krebs environ.

10. Procédé selon la revendication 9, dans lequel l'épaississant peut être sélectionné dans le groupe consistant en polyacrylates, hydroxyéthylcellulose, émulsions solubles en solution alcaline, résines d'uréthane éthoxylé hydrophobes, et émulsions solubles en solution alcaline modifiées hydrophobiquement.

11. Procédé selon la revendication 2, dans lequel l'au moins une pâte de pigment de charge comprend :
a) de 50 à 75 pour cent en poids, par rapport au poids total de la pâte, d'un pigment d'argile kaolinique ;
b) de 0,5 à 10 pour cent en poids, par rapport au poids total de la pâte, d'un glycol ; et
c) de 0,1 à 10 pour cent en poids, par rapport au poids total de la pâte, d'au moins un épaississant sélectionné dans le groupe consistant en polyacrylates, hydroxyéthylcellulose, émulsions solubles en solution alcaline, résines d'uréthane éthoxylé hydrophobes, et émulsions solubles en solution alcaline modifiées hydrophobiquement.
